## Europäisches Patentamt
## European Patent Office
## Office européen des brevets

(19)

(11) Publication number: **0 147 916**
**A1**

# (12) EUROPEAN PATENT APPLICATION

(21) Application number: 84305814.0

(22) Date of filing: 24.08.84

(51) Int. Cl.⁴: **G 01 M 3/20**
**G 01 M 3/04**

(30) Priority: 07.09.83 GB 8323996

(43) Date of publication of application:
10.07.85 Bulletin 85/28

(84) Designated Contracting States:
AT BE DE FR GB IT NL SE

(71) Applicant: BL TECHNOLOGY LIMITED
35-38 Portman Square
London W1H OHQ(GB)

(72) Inventor: Bray, David James
6 Orchard Road
Bromsgrove Worcestershire(GB)

(72) Inventor: Johnson, Peter Ernest
160 Birmingham Road
Redditch Worcestershire(GB)

(72) Inventor: Marshall, Peter Edward George
37 Saxon Close
Stratford-on-avon Warwickshire(GB)

(72) Inventor: Piper, Francis Raymond
5 Cedarwood Gardens
Evesham Worcestershire(GB)

(72) Inventor: Murdoch, Iain Hamilton
3 Max Stroke
Meriden West Midlands(GB)

(74) Representative: Waters, Jeffrey
ARG Patent Department Cowley Body Plant
Cowley Oxford OX4 5NL(GB)

(54) Detecting leaks.

(57) A leak detector comprises a detector head which is to be scanned across a surface to detect a signal gas eminating from the surface. The opposite side of the surface from the head is supplied with a signal gas under pressure so that signal gas passes through leaks in the surface. Detection of signal gas should then constitute detection of a leak. A curtain (1) of barrier gas is provided around an inlet (2) to protect the inlet from spurious signal gas. An annular sample inlet (42), leading to inlet (2), is arranged in conjunction with lip (41) to collect signal gas which originates in the form of a jet (35) and runs along a jet collection surface (37) to inlet 42.

SIGNAL GAS DETECTION SYSTEM

EP 0 147 916 A1

## DETECTING LEAKS

The invention relates to detecting leaks and particularly to a method of and apparatus for detection of a signal gas passing through a surface. The surface may be a motor vehicle body internally pressurised above ambient by a signal gas constituted by a mixture of helium and air. The leak detection may be concentrated on or confined to door and window seals and joints between sheets of material which make up the body.

It is essential for the detector to respond to a signal eminating directly from a leak but for it not to respond to spurious concentrations of signal gas which may be present in the atmosphere or may have originated from leaks in parts of the body which are not at the instant concerned being scanned. The position of a detector head when signal gas is detected is then a representation of the position of the leak.

It has already been proposed, for example in our co-pending UK Patent Application No. 83 01407 (Publication No. 2133892), to provided an annular opening surrounding a gas sample inlet and to direct a barrier gas through the opening to provide a gas curtain around the inlet to protect the inlet from signal gas other than that originating directly from a leak in the surface. Air is a convenient barrier gas. Throughout this specification and in the claims the term barrier gas is used generally to refer to a gas which behaves neutrally in relation to the signal gas and does not interfere with the detection of signal gas. When the barrier gas is air and the signal gas is an air-helium mixture, the detector is set so that it does not respond to the level of helium normally present in air.

One effect of the curtain is to produce a flow pattern in the form of a toroidal vortex within the area bounded by the probe, the curtain and the surface. Typical leaks enter this vortex flow, provide a significant concentration of signal gas within the vortex and result in detection of signal gas by the head.

According to one aspect of the present invention there is provided a leak detector comprising a detector head for scanning a test surface for detection of escape of signal gas through the test surface, an annular opening and means for directing a barrier gas through the annular opening to provide a gas curtain, and a jet collection surface arranged to guide signal gas leaks eminating from the test surface in the form of jets towards an elongate sample inlet which extends at least part way around the periphery of the jet collection surface and is surrounded by the annular opening. The elongated inlet and jet collection surface make the detector head more sensitive to leaks in the form of jets.

Preferably the jet collection surface is conical. The sample inlet may be an annular inlet around the periphery of the jet collection surface and this surface may be a convex conical surface.

The sample inlet may be formed between the edge of the jet collection surface and a lip on the detector head such that signal gas leaving the jet collection surface at its edge impinges on the lip at the inlet.

According to a second aspect of the invention there is provided a method of detecting leaks in the form of jets eminating from a surface including the steps of pressurising one side of the surface with signal gas to provide jets of signal gas from the surface, scanning the other side of the surface with a detector head incorporating a jet collection surface so that signal gas from the jets is guided along the jet collection surface and collecting at lest some of the signal gas guided along the jet collection surface at an elongate sample inlet which extends at least part way around the periphery of the jet collection surface.

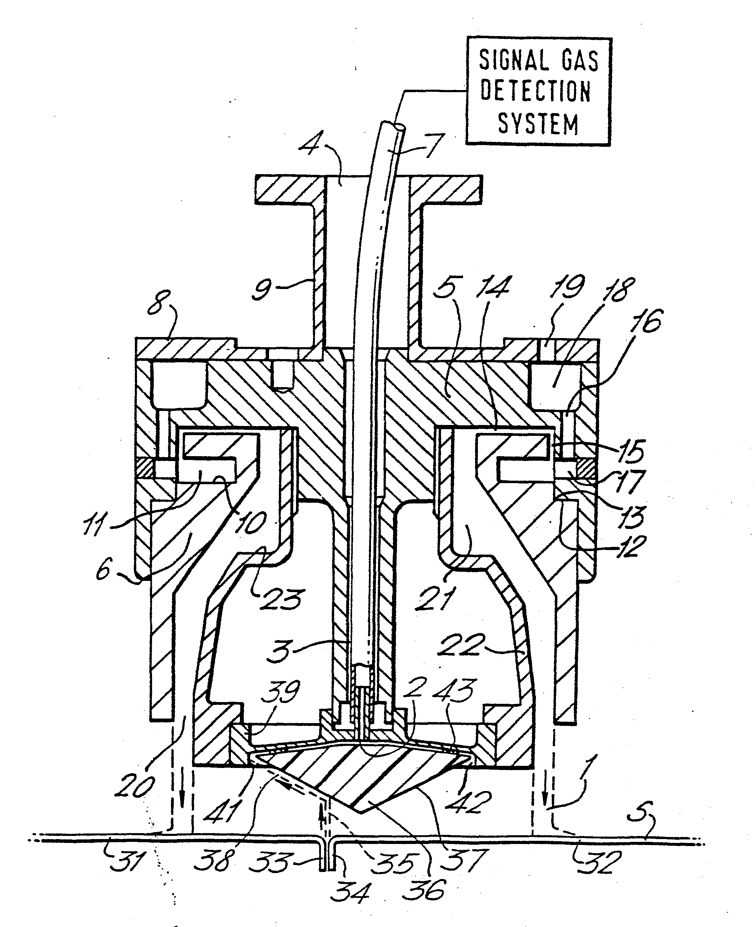

An embodiment of the invention will now be described by way of example with reference to the accompanying drawing which is a diagrammatic cross-section through a detector head of a leak detector according to the invention.

A curtain of barrier gas 1 surrounds a gas sample inlet 2 in the end of a detector head, connected by a flexible hose 7, running through passages 3 and 4, to a detection system for the signal gas. The head is arranged to scan a surface S for the presence of leaks. The under-side (as shown) of the surface S is pressurised with a signal gas so that signal gas passes through leaks in the surface. The barrier gas is air and the signal gas is air to which a small amount of helium has been added, and a mass spectrometer is used in the detection system for detecting the helium. Other signal gasses and barrier gasses can of course be used.

The leak detector shown in the drawing comprises a body 5 to which a sleeve 6 is secured. The top of the body 5 is closed by means of an end plate 8 which is integral with a tube 9 which defines the passage 4.

The sleeve 6 has a square sectioned groove 10 cut out from it, which extends all the way around the circumference of the sleeve, and defines a first annular chamber 11.

The distance between the top of the sleeve 6 and the adjacent

Surface of the body 5 is carefully controlled by means of abutting surfaces 12 on the sleeve and 13 on the body in order to define a circumferential orifice 14 which communicates via annular passage 15 with the first annular chamber 11.

Barrier gas is fed into the first annular chamber 11 by means of right angled drillings 16, 17 in the body, four of which are evenly spaced around the circumference of the body and communicate with a square sectioned groove which defines a second annular chamber 18 in the top face of the body. Inlet 19 connects to a source of compressed gas.

The purpose of the orifice 14 and of the tortuous path which the barrier gas must take before it reaches the orifice 14 is to ensure that barrier gas emerging from the orifice 14 enters an annular duct 21 with an equal mass flow rate around the entire circumference of the annular duct 21.

It will be noted that in order to pass from the second annular chamber 18 to the annular orifice 14 the barrier gas has to pass through drilling 16, turn a right angle into drilling 17, a further right angle into passage 15 and a further right angle into orifice 14. Finally, the gas stream emerging from orifice 14 projects directly onto a cylindrical wall normal to the gas flow.

The second annular chamber 18 acts like a manifold to distribute pressure equally amongst the drillings 16 so that barrier gas is fed at equal pressure along all points to the inlet ports of first annular chamber 11. Chamber 11 acts as a reservoir and helps to distribute air evenly around the inlet passage 15 to orifice 14.

After passing through the orifice 14, the barrier gas passes down the annular duct 21 the outer wall of which is defined by the sleeve 6 and the inner wall of which is defined by means of a hollow insert 22. The duct 21 is symmetrical about the axis of the detector, that is, the shape of the duct can be generated by any axial section of the duct when swept in a circle about the axis of the detector. The outer surface of the duct 21 has a frustro-conical portion with a semi-angle of approximately $30^{\circ}$ and the inner surface of the duct over this region has a shoulder 23. Lower down the outer surface of the duct 21 is cylindrical and over this region the inner surface is frustro-concial with a semi-angle of around $5^{\circ}$ to $10^{\circ}$. The surfaces of the duct are smooth.

The configuration of the duct 21 is such as to produce substantially laminar flow from a circular opening 20 even though the flow immediately after the orifice 14 is turbulent. Laminar flow means that at any point around the circumference of opening 21, the velocity profile across the width of the curtain is always positive and reduces gradually from the centre of the curtain to the sides.

Because equal mass flow rate enters the duct around its circumference, the velocity profile is also substantially the same around the entire circumference of the curtain. Consequently the curtain has no weak points or local disturbances in it and is of equal strength around its circumference.

It has been found that the shoulder 23, which forms a region of locally increased diameter of the duct 21, is important in producing the desired laminar flow.

The tapering of the duct 21 has the effect of allowing a shorter duct to be used than would otherwise be needed to generate laminar flow.

Typical dimensions are as follows:  diameter of curtain, 100 millimetres;  axial length of the duct 21,  100 millimetres; width of orifice 14, between 0.25 and 1.25 millimetres; width of curtain, between 2 and 4 millimetres.  The operating height of the detector from surface S is 2 to 25 millimetres.

The compressed air supply may be in the region of 0.3 to 1.3 bar. Lower pressures could be used if the air is conducted along larger diameter tubes. The gas inlet 2 and flexible hose assembly is evacuated by an auxiliary pump (not shown), which ensures rapid transfer of the signal gas when present into the analyser for detection by the mass spectrometer. The system detects helium quantities in the range $10^{-7}$ to $10^{-8}$ millibar litres per second. It is possible that results could be achieved without the auxiliary pump because the pressure within the curtain 1 is slightly in excess of atmospheric due to the effect of the barrier gas defining a closed volume with the surface S to be tested but the response would be considerably slower.

As thus far described, the detector corresponds to that described in our aforesaid pending UK Patent Application No. 83 01407 (Publication No. 2133892).

The drawing shows a part of a test surface S constituted by two pressed steel panels 31 and 32 flanged respectively at 33 and 34 and joined together by welding these flanges. If there is a narrow gap between flanges 33 and 34, this can result in a high velocity jet of signal gas as indicated at 35.

In accordance with the invention, the head incorporates a nose 36 formed of a soft material which would not damage a surface S if it were to accidentally come in contact with the surface. Nose 36 has a conical surface 37 which acts as a jet collection surface. That is when a high velocity jet of signal gas such as 35 meets surface 37, the signal gas tends to be deflected along the surface as indicated at 38. Nose 36 is mounted in a recess in a base member 39 and the edge of the recess forms a lip 41. A space between the outer peripheral edge of surface 37 and lip 41 forms a sample inlet 42. Gas is drawn into this inlet and through a filter 43 and thereafter is passed to a detector for signal gas. The fact that the signal gas after being deflected as shown at 38 impinges on lip 41 immediately after leaving jet collection surface 37 causes the signal gas to be drawin into the inlet in substantial quantities. If desired, the soft nose may form only a part of the conical jet collection surface.

The width of the sample inlet 42 is between 0.1 millimetre and 1.0 millimetre. The diameter of the inlet should be between half and three quarters of the diameter of the opening for the gas curtain. A larger diameter could place the inlet in a region where the basic toroidal vortex tends to break down into irregular flow which might disperse and dilute the signal gas to an undesired extent. A small diameter inlet reduces the effective width of the path scanned by the jet collection surface because the jet colection surface 37 is of course effective only for jets which impinge on it.

The conical jet collection surface shown is effective not only for jets perpendicular to the test surface but also for inclined jets. The preferred range of cone semi angle is from $80^{\circ}$ to $45^{\circ}$. It is not essential for the jet collection surface to be conical. A flat or even concave shape could be satisfactory.

The basic requirement for the inlet is that it should be elongate and arranged to collect signal gas which is deflected along the jet collection surface. A simple slot could form a suitable inlet if the detector head could always be orientated such that the slot is transverse to the direction of scanning. In such a case a flat jet collection surface, possibly inclined to the test surface, could be employed.

CLAIMS

1    A leak detector comprising a detector head for scanning
     a test surface for detection of escape of signal gas
     through the test surface, an annular opening and means
     for directing a barrier gas through the annular opening
     to provide a gas curtain, and a jet collection surface
     arranged to guide signal gas leaks eminating from the
     test surface in the form of jets towards an elongate
     sample inlet which extends at least part way around the
     Periphery of the jet collection surface and is
     surrounded by the annular opening.

2    A leak detector as claimed in claim 1 wherein the sample
     inlet is an annular inlet around the periphery of the
     jet collection surface.

3    A leak detector as claimed in claim 1 or claim 2 wherein
     the jet collection surface is a convex conical surface.

4    A leak detector as claimed in claim 3 wherein the
     semi-angle of the cone lies between $80^{o}$ and $45^{o}$.

5    A leak detector as claimed in claim 3 or claim 4 wherein

- 12 -                                          0147916

the conical jet collection surface has a soft nose which would not damage the test surface on accidental contact therewith.

6    A leak detector as claimed in any one of the preceding claims wherein the sample inlet is formed between the edge of the jet collection surface and a lip on the detector head such that signal gas leaving the jet collection surface impinges on the lip at the inlet.

7    A leak detector as claimed in any one of the preceding claims including a filter arranged in the inlet.

8    A leak detector as claimed in any one of the preceding claims wherein the width of the elongate sample inlet is between 0.2 millimetre and 1.0 millimetre.

9    A method of detecting leaks in the form of jets eminating from a surface including the steps of pressurising one side of the surface with a signal gas to provide jets of signal gas from the surface, scanning the other side of the surface with a detector head incorporating a jet collection surface so that signal gas from the jets is guided along the jet collection surface and collecting at least some of the signal gas guided along the jet collection surface at an elongate sample inlet which extends at least partway around the periphery of the jet collection surface.

0147916

1/1

SIGNAL GAS
DETECTION
SYSTEM

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 064 880 (BL TECHNOLOGY LTD.) | 1 | G 01 M 3/20 <br> G 01 M 3/04 |
| | --- | | |
| D,P <br> A | GB-A-2 133 892 (BL TECHNOLOGY LTD.) | | |
| | ----- | | |

**TECHNICAL FIELDS SEARCHED (Int. Cl.4)**

G 01 M 3/04
G 01 M 3/20

The present search report has been drawn up for all claims

| Place of search | Date of completion of the search | Examiner |
|---|---|---|
| BERLIN | 28-12-1984 | KOEHN G |